Europäisches Patentamt

European Patent Office

Office européen des brevets

(11) Publication number: **0 175 846**
**A2**

# (12) EUROPEAN PATENT APPLICATION

(21) Application number: **85107084.7**

(22) Date of filing: **07.06.85**

(51) Int. Cl.⁴: **B 60 B 13/00**
**F 16 F 15/32**

(30) Priority: **06.06.84 AU 5386/84**

(43) Date of publication of application:
**02.04.86 Bulletin 86/14**

(84) Designated Contracting States:
**AT BE CH DE FR GB IT LI LU NL SE**

(71) Applicant: **PACIFIC DESIGN P.T.E. LIMITED (SDN BHD)**
**85 Christie Street**
**St. Leonards New South Wales 2065(AU)**

(72) Inventor: **Hunter, Michael Jeffrey**
**A12/1 Campbell Parade**
**Manly Vale New South Wales 2093(AU)**

(74) Representative: **Muir, Ian R. et al,**
**HASELTINE LAKE & CO. Hazlitt House 28 Southampton**
**Buildings Chancery Lane**
**London WC2A 1AT(GB)**

(54) **A wheel balance weight.**

(57) A vehicle wheel balance weight 14 consisting of a lead weight portion 15 and a clip portion 16, the clip portion 16 is formed of metal strip bent about several transverse axes so as to form a loop 18 encompassing the weight portion 15, and a securing portion 17 to enable fixing of the balance weight 14 to a vehicle wheel rim 13.

FIG. 2

Croydon Printing Company Ltd.

- 1 -

"A WHEEL BALANCE WEIGHT"

The present invention relates to wheel balance weights for motor vehicles and also to the method of manufacture thereof.

In the manufacture of wheel weights, a lead weight is cast with a clip embedded within the lead. The clip has apertures or deformations which secure the clip to the lead weight. However this method of manufacture has several disadvantages which include excessive cost, and brittleness of the lead weight. In order to effectively secure the clip to the lead weight, it is necessary to increase the strength of the lead weight by the addition of about 2% of antimony. However, such an addition increases the brittleness of the weight with the result that often the weight will fracture. A still further disadvantage is that weights of different masses must be manufactured again adding to the cost of manufacture.

It is the object of the present invention to overcome or substantially ameliorate the above disadvantages.

There is disclosed herein a vehicle wheel balance weight comprising a weight portion and a clip portion to secure the weight portion to a wheel rim; and wherein said clip portion is formed of metal strip bent about several transverse axes so as to provide a loop surrounding said weight portion so as to be fixed thereto, and a securing

RMV/85T

portion to engage the rim so as to fix the weight portion thereto.

There is further disclosed herein a method of manufacturing a wheel weight consisting of a weight portion and a clip portion, said method comprising the steps of: extruding material to form said weight portion; providing metal strip to form said clip portion; locating said strip adjacent the extruded weight portion; and bending said strip about several transverse axes so as to form a loop surrounding said extruded weight portion; and to form a clip portion to enable fixing of the clip to a wheel rim.

A preferred form of the present invention will now be described by way of example with reference to the accompanying drawings wherein:

Fig. 1 is a schematic perspective view of a vehicle wheel to which is attached a balance weight;

Fig. 2 is a schematic perspective view of the balance weight of Fig. 1;

Fig. 3 is a schematic front elevation of the balance weight of Fig. 2; and

Fig. 4 is a schematic end elevation of the balance weight of Fig. 2.

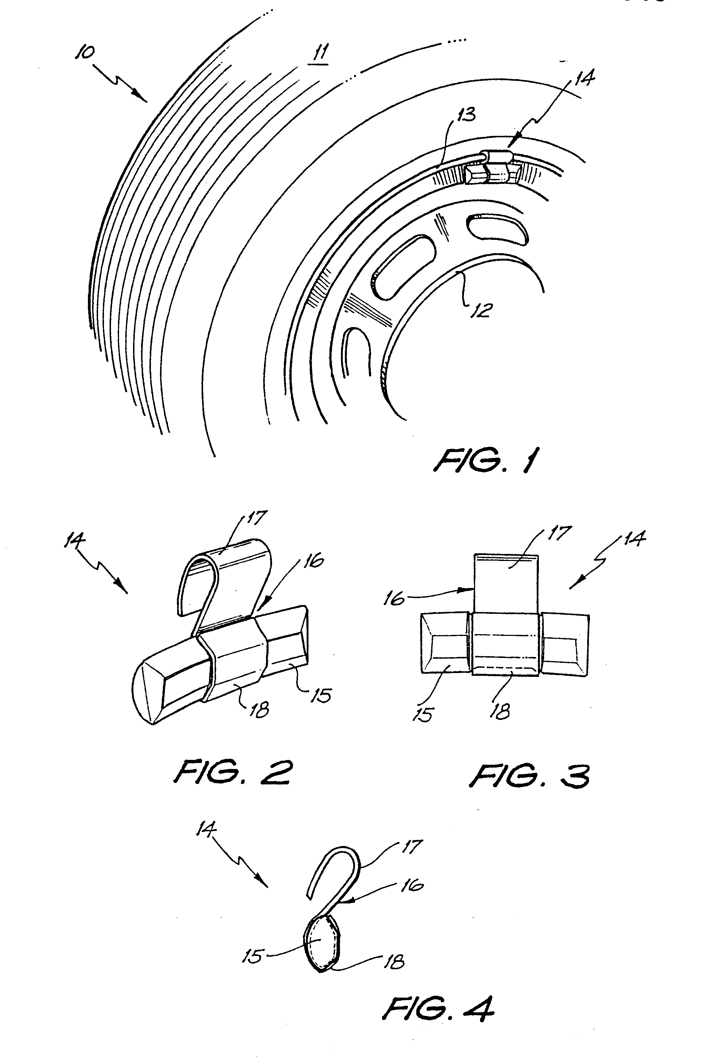

In Fig. 1 there is schematically depicted a vehicle wheel 10 having a pneumatic tyre 11 mounted on a wheel rim 12. The rim 12 has a peripheral loop 13 to which there is attached a wheel balance weight 14. The weight 14 is more fully depicted in Figs. 2 to 4 and consists of a balance mass 15 and a clip 16 which attaches the balance mass 15 to the lip 13. The balance mass 15 would be curved so as to snugly fit against the lip 13 while the clip 16 has a U-shaped clip portion 17 which fits over and resiliently engages the lip 13 to secure the balance mass 15 to the rim 12. The clip 16 also has a loop portion 18 which surrounds the balance mass 15 so as to securely engage same.

In the method of manufacture of the abovedescribed wheel balance 14, the balance mass 15 could be formed from an extruded rod of lead cut to the required length so that the balance mass 15 provides the correct weight to be applied to the wheel 10. Accordingly, it should be appreciated that the

- 3 -    **0175846**

extruded lead material can be cut to any desired length so as to provide a variety of balance masses 15. The clip 16 would be formed from stainless steel strip which is cut to desired lengths and bent about several axes so as to provide the loop portion 18 and the clip portion 17. To enable bending of the steel strip, tempering of the strip, at each location at which it is bent, is required. Preferably in manufacture of the balance weight 14, the strip to form the clip 16 would have one end bent to a U-shaped configuration so as to at least partly surround the extruded lead rod to form the balance mass 15. Thereafter, the strip to form the clip 16 would be further deformed so as to form the loop portion 18 and the other end of the strip bent to form the clip portion 17. It would also be necessary to deform the balance mass 15 to curve it so as to snugly fit the rim 12 adjacent the lip 13. It may also be advantageous to provide a hole in the clip 16 to facilitate removal thereof from the rim 12. In a further preferred form of the present invention, a stick-on wheel balance weight is also provided for rims where such an arrangement is desirable. These stick-on wheel balance weights, would be formed from an extruded lead rod or strip, to which there is applied on a continuous basis a double sided tape. The exposed side of the tape would be covered by a film which would be removed when the balance weight is to be applied to the wheel. The stick-on wheel balance weight would be formed into a roll and possibly provided with weakened transversely extending portions dividing the strip up into desired weights.

It may also be advantageous in the manufacture of the wheel balance weight 14, for the clip 16 to be partly formed and then rolled for storage or transportation purposes.

RMV/85T

## CLAIMS

## "A WHEEL BALANCE WEIGHT"

1.    A vehicle wheel balance weight 14 comprising a weight portion 15 and a clip portion 16 to secure the weight portion 15 to a rim 13 of a vehicle wheel;  and wherein said clip portion 16 is formed of metal strip bent about several transverse axes so as to provide a loop 18 surrounding said weight portion so as to be fixed thereto, and a securing portion 17 to engage the rim 13 so as to fix the weight portion 15 thereto.

2.    The weight 14 of claim 1 wherein said securing portion 17 is a clip 17 of generally U-shaped configuration.

3.    The weight 14 of claim 1 wherein said metal strip is stainless steel and said weight portion 15 is formed of lead.

4.    A method of manufacturing a vehicle wheel weight 14 consisting of a weight portion 15 and a clip portion 16, said method comprising the steps of:  extruding material to form said weight portion 15;  providing metal strip to form said clip portion 16;  locating said strip adjacent said extruded weight portion 15;  and bending said strip about several transverse axes so as to form a loop 18 surrounding said extruded weight portion 15, and to form a securing portion 17 to enable fixing of the weight 14 to a vehicle wheel rim.

5.    The method of claim 1 further including heating said strip at locations about which said strip is to be bent prior to bending thereof.

6.    The method of claim 4 wherein said extruded material 15 is lead and said metal strip is stainless steel.

7.    A wheel weight substantially as hereinbefore described with reference to the accompanying drawings.

8.    A method of forming a wheel weight substantially as hereinbefore described with reference to the accompanying drawings.

0175846

FIG. 1

FIG. 2

FIG. 3

FIG. 4